# EUROPÄISCHE PATENTSCHRIFT

(11) **EP 0 603 734 B1**
(45) Veröffentlichungstag und Bekanntmachung des Hinweises auf die Patenterteilung: **28.06.1995**
(21) Anmeldenummer: 93120241.0
(22) Anmeldetag: 16.12.1993
(51) Int. Cl.: B62D 7/00

(54) **Anschlagteil für eine Lenkachse eines Kraftfahrzeugs**
Steering stop for a motor vehicle
Butée de direction pour un véhicule automobile

(30) Priorität: 23.12.1992 DE 4243824
(43) Veröffentlichungstag der Anmeldung: 29.06.1994
(73) Patentinhaber: ADAM OPEL AG, 65423 Rüsselsheim (DE)
(72) Erfinder: Stoll, Helmut, Dipl.-Ing., D-64569 Nauheim (DE); Glatzel, Johannes, Dipl.-Ing., D-55276 Oppenheim (DE)
(74) Vertreter: Kümpfel, Heinz, Dipl.-Ing.

(56) Entgegenhaltungen:
- DE-C- 3 736 666

## Beschreibung

Die Erfindung betrifft ein Anschlagteil für den Lenkanschlag einer Lenkachse eines Kraftfahrzeugs, bei welchem ein Achsschenkel mittels eines fest an ihm angebrachten Lenkhebels in eine Endstellung bewegbar ist, in der eine Anschlagfläche des Lenkhebels gegen eine Anschlagfläche eines Radführungsteils anliegt, wobei in einer der Anschlagflächen zur Verminderung oder Beseitigung von Kontaktgeräuschen der Anschlagflächen das Anschlagteil angeordnet ist.

Ein Anschlagteil der vorstehenden Art ist Gegenstand der DE-C-37 36 666. Diese Schrift befaßt sich mit dem Problem des Entstehens von Kontaktgeräuschen infolge der Relativbewegungen der aneinanderstoßenden Anschlagflächen beim Einfedern der gelenkten Fahrzeugräder. In der Praxis sind bei metallischen Anschlagflächen diese Kontaktgeräusche derart stark, daß Fahrzeugbesitzer oftmals einen Schaden im Bereich der Radaufhängung vermuten und wegen dieser Kontaktgeräusche die Werkstatt aufsuchen.

Gemäß der genannten DE-C-37 36 666 sollen die beim Einfedern auftretenden Kontaktgeräusche dadurch beseitigt oder vermindert werden, daß das Anschlagteil als kleinflächiges Bauteil aus einem weichen, schmierfähigen Material ausgebildet ist. Solche Anschlagteile vermögen die Geräuschsbildung bei der einfederungsbedingten Relativbewegung der Anschlagteile zu mindern, beseitigen jedoch nicht die eigentliche Ursache für die Geräusche, nämlich das Aufeinanderreiben der Anschlagflächen. Hiervon abgesehen unterliegen weiche, schmierfähige Anschlagteile einem relativ hohen Verschleiß, so daß sie von Zeit zu Zeit ausgewechselt werden müssen.

Der Erfindung liegt das Problem zugrunde, ein Anschlagteil der eingangs genannten Art so auszubilden, daß Kontaktgeräusche durch aufeinander reibende Anschlagflächen zuverlässig ausgeschlossen sind und ein Verschleiß sich berührender Teile nicht eintritt.

Dieses Problem wird erfindungsgemäß dadurch gelöst, daß das Anschlagteil aus einem mit einer Anschlagfläche fest zu verbindenden Tragteil und einer der gegenüberliegenden Anschlagfläche zugewandten Anschlagplatte besteht und daß die Anschlagplatte quer zur Anschlagrichtung elastisch verschiebbar mit dem Tragteil verbunden ist.

Ein solches Anschlagteil beseitigt die Ursache für die bisher nur unvollkommen vermeidbaren Kontaktgeräusche, indem Reibung zwischen den sich berührenden Flächen ausgeschlossen wird. Bei dem erfindungsgemäßen Anschlagteil liegt das Tragteil stets unverschiebbar an einem Bauteil und die Anschlagplatte gegen das andere Bauteil relativ zu diesem unverschiebbar an. Kommt es zu einer Relativbewegung zwischen den Bauteilen, dann verschiebt sich die Anschlagplatte relativ zum Tragteil aufgrund der elastischen Verbindung zwischen diesen Teilen. Dadurch werden die bisher unvermeidlichen Reibgeräusche verhindert, ohne daß hierzu verschleißanfällige Bauteile notwendig werden.

Die Anschlagplatte kann auf sehr unterschiedliche Weise elastisch mit dem Tragteil verbunden sein. Sie könnte beispielsweise elastische Verbindungsstege aufweisen, welche sich bei einer Verschiebung der Anschlagplatte relativ zum Tragteil elastisch verformen. Besonders einfach ist das Anschlagteil gestaltet, wenn das Tragteil und die Anschlagplatte nach Art eines elastischen Lagers durch eine Elastomerschicht miteinander verbunden sind. Eine solche Elastomerschicht hat zusätzlich den Vorteil, daß das Anschlagteil in Anschlagrichtung nachgiebig ist, so daß auch bei einer schnellen Bewegung gegen den Anschlag keine übermäßigen Verzögerungskräfte auftreten.

Zur Erhöhung der Reibung zwischen der Anschlagplatte und der in Anschlagstellung der Achse gegen sie anliegenden Anschlagfläche ist es vorteilhaft, wenn gemäß einer anderen Weiterbildung der Erfindung die Anschlagplatte eine der gegenüberliegenden Anschlagfläche zugewandte Reibfläche mit einer Rändelung hat.

Konstruktiv besonders einfach ist das Anschlagteil gestaltet, wenn es zur gegenüberliegenden Anschlagfläche als offener Topf ausgebildet ist, in welchem sich die Elastomerschicht befindet, und wenn zwischen der auf der Elastomerschicht befestigten Anschlagplatte und der Elastomerschicht relativ zum Mantel des topfförmigen Tragteils ein Zwischenraum vorgesehen ist.

Die Fixierung des Anschlagteiles auf einem Bauteil ist mit geringem Aufwand zuverlässig zu erreichen, wenn das Tragteil rund ausgebildet ist und einen entgegengesetzt zu der Anschlagplatte vorspringenden Rand hat.

Die Erfindung läßt zahlreiche Ausführungsformen zu. Zur weiteren Verdeutlichung ihres Grundprinzips sind zwei davon in der Zeichnung dargestellt und werden nachfolgend beschrieben. In ihr zeigen die
- Fig.1: eine Draufsicht auf einen Radträger mit angrenzenden Bauteilen und dem erfindungsgemäßen Anschlagteil,
- Fig.2: einen Schnitt durch die Anordnung nach Fig.1 im Bereich des Anschlagteiles entlang der Linie II - II,
- Fig.3: einen der Figur 2 entsprechenden Schnitt in einer nach einem gegenüber Fig.2 zusätzlichen Einfedern sich ergebenden Position,
- Fig.4: eine Draufsicht auf einen Endbereich eines Lenkers mit dem erfindungsgemäßen Anschlagteil.

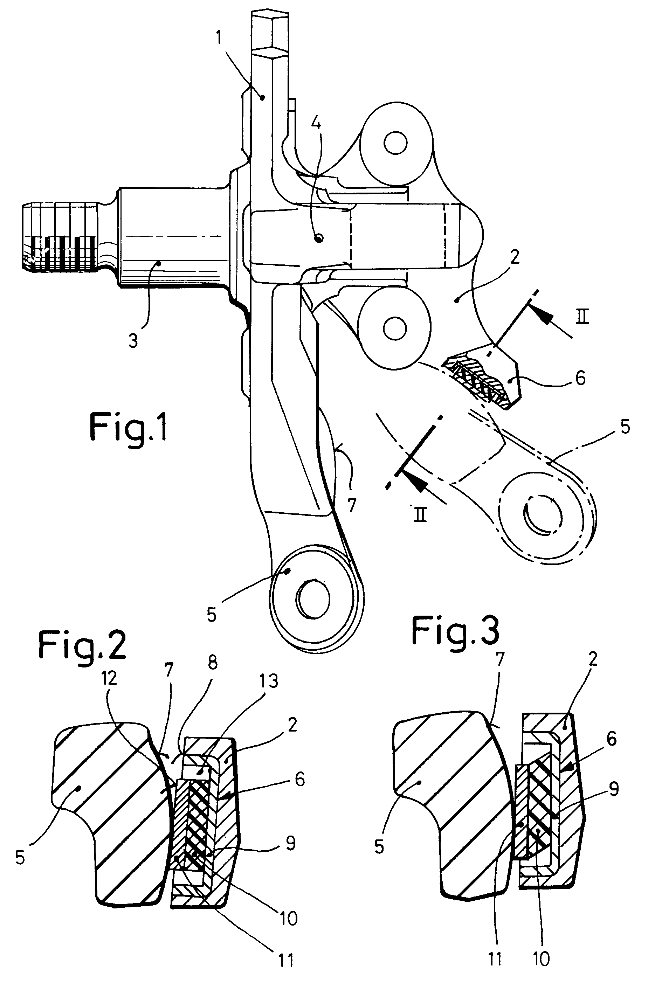

Die Figur 1 zeigt einen Achsschenkel 1, welcher auf übliche Weise mit einer ein Kugelgelenk bildenden Anschlußplatte 2 verbunden ist und zum Einschlagen des nicht gezeigten, auf einem Achszapfen 3 des Achsschenkels 1 gelagerten Rades um eine senkrechte Achse 4 verschwenkt werden kann. Die Anschlußplatte 2 wird mittels eines in Figur 1 nicht dargestellten Lenkers mit der Karosserie des Kraftfahrzeuges verbunden.

Zum Verschwenken des Achsschenkels 1 dient ein an diesem angeformter Lenkhebel 5, an dem das Ende einer nicht gezeigten Spurstange befestigt wird. Wichtig für die Erfindung ist ein Anschlagteil 6, welches bei diesem Ausführungsbeispiel fest an der Anschlußplatte 2 angebracht ist und gegen das bei vollständig eingeschlagenem Vorderrad der Lenkhebel 5 mit einer balligen Anschlagfläche 7 gelangt. Zur Verdeutlichung dieses Sachverhaltes ist in Figur 1 diese Anschlagstellung des Lenkhebels 5 strichpunktiert dargestellt.

Die im Maßstab gegenüber Figur 1 vergrößerte Schnittdarstellung gemäß Figur 2 zeigt den Lenkhebel 5 mit seiner Anschlagfläche 7. Weiterhin ist die Anschlußplatte 2 zu erkennen, welche der Anschlagfläche 7 gegenüberliegend eine Anschlagfläche 8 hat, in die das Anschlagteil 6 eingesetzt ist. Dieses besteht aus einem topfförmigen Tragteil 9, einer darauf aufgebrachten Elastomerschicht 10 und einer von dieser getragenen Anschlagplatte 11. Diese Anschlagplatte 11 hat eine der Anschlagfläche 7 zugewandte Reibfläche 12, die vorzugsweise gerändelt ist.

Für die Funktion des Anschlagteils 6 ist weiterhin wichtig, daß seitlich zwischen der Anschlagplatte 11 und dem mantelförmigen Rand des Tragteils 9 und weiterhin zwischen der Elastomerschicht 10 und dem Rand des Tragteils 9 ein Zwischenraum 13 vorhanden ist.

Die Figur 3 verdeutlicht, wie sich das Anschlagteil 6 verhält, wenn es infolge eines Einfederns zu einer Relativbewegung zwischen dem Lenkhebel 5 und der Anschlußplatte 2 kommt. Infolge des Reibschlusses zwischen der Anschlagfläche 7 und der Anschlagplatte 11 folgt die Anschlagplatte 11 der Bewegung des Lenkhebels 5 und verformt dabei die Elastomerschicht 10. Es tritt somit nirgends eine gleitende Reibung auf, so daß hierdurch verursachte Geräusche nicht entstehen können.

Das Anschlagteil 6 könnte natürlich statt an der Anschlußplatte 2 auch am gegenüberliegenden Bauteil, dem Lenkhebel 5, angebracht sein. Dann müßte die Anschlagfläche 8 der Anschlußplatte 2 entsprechend ballig ausgebildet werden.

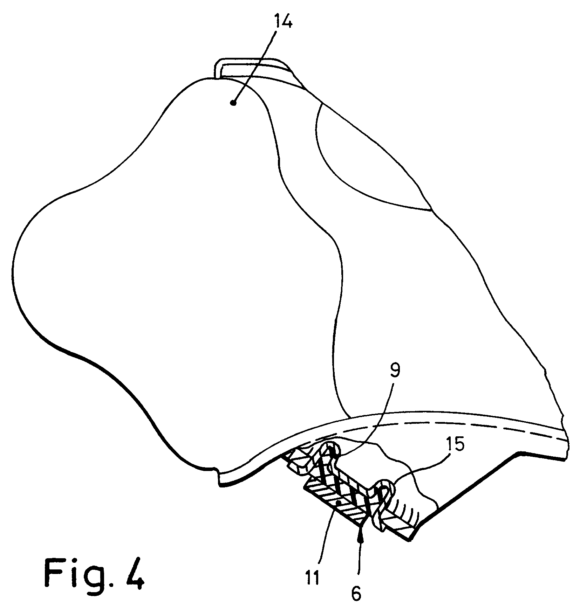

Die Figur 4 zeigt die Anordnung eines gegenüber dem zuvor beschriebenen Ausführungsbeispiels geänderten Anschlagteils 6 in einem Lenker 14. Dieses Anschlagteil 6 ist rund ausgebildet und hat ein Tragteil 9 mit einem umlaufenden Rand 15, der von der Anschlagplatte 11 weg gerichtet ist und dadurch das Anschlagteil 6 auf dem Lenker 14 fixiert.

## Patentansprüche

1. Anschlagteil für den Lenkanschlag einer Lenkachse eines Kraftfahrzeugs, bei welcher ein Achsschenkel mittels eines fest an ihm angebrachten Lenkhebels in eine Endstellung bewegbar ist, in der eine Anschlagfläche des Lenkhebels gegen eine Anschlagfläche eines Radführungsteils anliegt, wobei in einer der Anschlagflächen zur Verminderung oder Beseitigung von Kontaktgeräuschen der Anschlagflächen das Anschlagteil angeordnet ist, **dadurch gekennzeichnet**, daß das Anschlagteil (6) aus einem mit einer Anschlagfläche (8) fest zu verbindenden Tragteil (9) und einer der gegenüberliegenden Anschlagfläche (7) zugewandten Anschlagplatte (11) besteht und daß die Anschlagplatte (11) quer zur Anschlagrichtung elastisch verschiebbar mit dem Tragteil (9) verbunden ist.

2. Anschlagteil nach Anspruch 1, **dadurch gekennzeichnet**, daß das Tragteil (9) und die Anschlagplatte (11) nach Art eines elastischen Lagers durch eine Elastomerschicht (10) miteinander verbunden sind.

3. Anschlagteil nach den Ansprüchen 1 oder 2, **dadurch gekennzeichnet**, daß die Anschlagplatte (11) eine der gegenüberliegenden Anschlagfläche (7) zugewandte Reibfläche (12) mit einer Rändelung hat.

4. Anschlagteil nach einem der vorangehenden Ansprüche, **dadurch gekennzeichnet**, daß das Tragteil (9) als zur gegenüberliegenden Anschlagfläche (7) offener Topf ausgebildet ist, in welchem sich die Elastomerschicht (10) befindet, und daß zwischen der auf der Elastomerschicht (10) befestigte Anschlagplatte (11) und der Elastomerschicht (10) relativ zum Mantel des topfförmigen Tragteils (9) ein Zwischenraum (13) vorgesehen ist.

5. Anschlagteil nach einem der vorangehenden Ansprüche, **dadurch gekennzeichnet**, daß das Tragteil (9) rund ausgebildet ist und einen entgegengesetzt zu der Anschlagplatte (11) vorspringenden Rand (15) hat.

## Claims

1. Stop part for the steering stop of a motor vehicle steering axle, in which a steering knuckle through a steering arm, firmly fixed to the steering knuckle, can be moved into an end position in which a stop surface of the steering arm rests against a stop surface of a wheel guide part, wherein for reducing or removing the contact noises of the stop surfaces the stop part is arranged in one of the contact surfaces, **characterised** in that the stop part (6) consists of a support part (9), to be firmly connected to a stop surface (8), and a stop plate (11) facing one of the oppositely arranged stop surfaces (7) and that the stop plate (11) is connected to the support part (9) for elastic displacement transverse to the stop direction.

2. Stop part according to claim 1, **characterised** in that the support part (9) and the stop plate (11) are connected together through an elastomeric layer in the manner of an elastic bearing.

3. Stop part according to the claims 1 or 2, **characterised** in that the stop plate (11) has a friction surface (12) with a knurl facing the oppositely arranged stop surface (7).

4. Stop part according to one of the preceding claims, **characterised** in that the support part (9) is constructed as a cup, opening towards the oppositely located stop surface (7), in which is situated the elastomeric layer (10), and that between the stop plate (11) fixed to the elastomeric layer (10) and the elastomeric layer (10) an intermediate space (13) is provided relative to the casing of the cup-shaped support part (9).

5. Stop part according to one of the preceding claims, **characterised** in that the support part (9) is of round shape and has a rim (15) projecting in the opposite direction to the stop plate (11).

## Revendications

1. Coussinet de butée pour la butée de direction d'un essieu directeur d'un véhicule automobile, dans lequel une fusée de roue est amenée au moyen d'un levier d'attaque de fusée solidaire de ladite fusée dans une position extrême, dans laquelle une surface de butée du levier d'attaque de fusée vient en contact contre une surface de butée d'une pièce de guidage de roue, le coussinet de butée étant disposé dans l'une des surfaces de butée aux fins de réduire ou d'éliminer les bruits de contact entre lesdites surfaces de butée, caractérisé par le fait que le coussinet de butée (6) se compose d'une partie support (9) à fixer sur une surface de butée (8) et d'une plaque de butée (11) tournée vers la surface de butée (7) en vis-à-vis et par le fait que la plaque de butée (11) est liée à la partie support (9) avec possibilité de déplacement élastique transversalement à la direction de butée.

2. Coussinet de butée selon la revendication 1, caractérisé par le fait que la partie support (9) et la plaque de butée (11) sont liées entre elles à la manière d'un plot élastique par une couche (11) en élastomère.

3. Coussinet de butée selon la revendication 1 ou la revendication 2, caractérisé par le fait que la plaque de butée (11) comporte une surface de frottement (12) avec des stries qui est tournée vers la surface de butée (7) en vis-à-vis.

4. Coussinet de butée selon l'une des revendications précédentes, caractérisé par le fait que la partie support (9) est agencée sous la forme d'un pot ouvert en direction de la surface de butée (7) en vis-à-vis et dans lequel se trouve la couche (10) d'élastomère et par le fait qu'il est prévu, entre la plaque de butée (11) fixée sur la couche (10) d'élastomère et ladite couche (10) d'élastomère, un espace par rapport à la paroi de la partie support (9) en forme de pot.

5. Coussinet de butée selon l'une des revendications précédentes, caractérisé par le fait que la partie support (9) est ronde et présente un bord (15) qui fait saillie dans la direction opposée à la plaque de butée (11).
